# EUROPEAN PATENT APPLICATION

(11) **EP 4 303 841 A1**
(43) Date of publication of application: **10.01.2024**
(21) Application number: 23183063.9
(22) Date of filing: 03.07.2023
(51) Int. Cl.: G07F 17/26, G07F 9/00, G07F 9/10, G07F 5/22, G07F 5/24, G07F 7/04, H04N 1/00

(54) **COLUMN WITH 24H PRINTER POWERED BY A PHOTOVOLTAIC PANEL FOR PRINTING PHOTOS AND IMAGES**

(30) Priority: 06.07.2022 IT 202200002869 U
(71) Applicant: Di Cecca, Roberto, 75100 Matera (MT) (IT); Di Cecca, Emanuele, 75100 Matera (MT) (IT); Di Cecca, Piervito Michele, 75100 Matera (MT) (IT)
(72) Inventor: Di Cecca, Roberto, 75100 Matera (MT) (IT); Di Cecca, Emanuele, 75100 Matera (MT) (IT); Di Cecca, Piervito Michele, 75100 Matera (MT) (IT)
(74) Representative: Tiburzi, Andrea

(57) **Abstract**

The present invention concerns a system (S) integrated environment-friendly for instantaneous printing of images/photos, comprising a sublimation or inkjet printer (3), which allows printing of an image or a photo immediate and of quality, a vertical column (2) having a superior base, a lateral structure capable of containing and protect said printer (3), wherein said column (2) is equipped with a first opening (13) to insert coins, an electronic device to read and count (14) able to count the coins inserted on said first opening (13), a device to provide electrical power to said system (S), having a photovoltaic panel (1) arranged on said superior base of said column (2), a Wi-Fi repeater (15) able to distribute a free line network, a first QR Code (8) arranged on a first portion of said lateral structure and configured to be scanned and to readdress to the network distributed by said Wi-Fi repeater (15); and a second QR code (5) arranged on a second portion of said lateral structure and configured to be scanned by a smartphone (6) and to readdress to the download of an application (16), which allows said smartphone (6) to functionally connect said system (S) and to manage said printer (3).

The present invention concerns also an operating method of the instantaneous printing system (S).

## Description

The present invention concerns a simplification of printing photographs and images, which is done easily and with just a few clicks, in an environment-friendly manner.

### Field of the invention

More precisely, the present invention refers to an integrated system, environment-friendly, for printing images/photographs instantaneously, allowing a user to interact with said instantaneous printing system, by means of a smartphone, a tablet, or other electronic device.

### State of the art

The digitization of images has made photography and the memories associated with it lose their fascination, giving rise to the need to return to hard copy printing to seal moments that would otherwise be lost. As it is well known, anyone who wants to print an image is required to go to a photo center (often away from the place of the photographic shot) and, obviously, to adhere to the starting and finishing times of the activity thereof. Often the procrastination of the moment of printing and the consequent lowering of the enthusiasm associated with the shot, becomes the reason why most of the time one ends up not printing the shot and losing that memory forever.

It appears clear that the ability to immediately print photographs close to strategic places, heavily pedestrian and tourist areas, for example, near scenic spots, historical areas, stations, and shopping centers would give users, tourists, and, in general, citizens an additional service, attracting them with greater inclination to these places.

It appears clear the lack of projects aimed to the valorization of the territory which take into account the option of providing a service to citizens and tourist, who would take advantage of an immediate printing, which represents a personalized and tangible memory of a holiday or a specific event.

### Scope of the invention

Scope of the present invention is to provide the user with a printing system which guarantees the option to print his photographs at any time during 365 days of the year.

Another scope of the present invention is to provide an immediate printing system integrated in the surrounding area substantially comprising a vertical column, a photovoltaic module having a photovoltaic panel arranged on the top of the column.

Said system may comprise a charge regulator, a group of batteries, an inverter, and the corresponding cables, e.g., the electrical connections to connect said several devices.

The system may be managed by means of an application, that can be downloadedby means of a code, e.g., a QR Code present in the column, wherein the application may be available in the most common languages and it allows to select a printing format from a list of printing formats and to edit the images by personalizing them by means of labels, marks, filters, or symbols.

### Object of the invention

In light of the above, it is, therefore, the purpose of the present invention to provide an integrated system in the territory that allows for immediate printing of photos/images.

It is therefore a specific object of the present invention a system for printing photos/images as defined in claim 1.

Preferred embodiments are defined in the dependent claims.

### Brief description of the figures

The invention will be now described for illustrative but not limitative purpose, with particular reference to the drawing the enclosed figure, wherein:
figure 1 shows a front view of a system for immediate printing of photos/images, subject of the present invention in which a vertical column on which a photovoltaic panel is arranged, and on which there are two QR Codes, an outlet to eject the photos printed, instructions for the use of the machine, an opening for inserting coins, a coin counter/electronic token counter, a Wi-Fi repeater, batteries, and in the proximity of said system, a user with a smartphone in his hand with an application downloaded for operating the system are shown;
figure 2 represents, in lateral view, a simplification of the device for producing power comprising a photovoltaic panel, batteries, and electrical cables connected to a printer; and
figure 3 schematically shows a photovoltaic device for producing power having a photovoltaic panel, a charge regulator, batteries, an inverter, a printer, capable of printing photos/images and cables to electrically connect said printer and said photovoltaic device.

### Detailed description

In the various figures, similar parts will be indicated with the same reference numbers.

With reference to the figures a system for immediately printing images/photos and capable of functioning twenty-four hours per day (h24) during 365 days per year is disclosed.

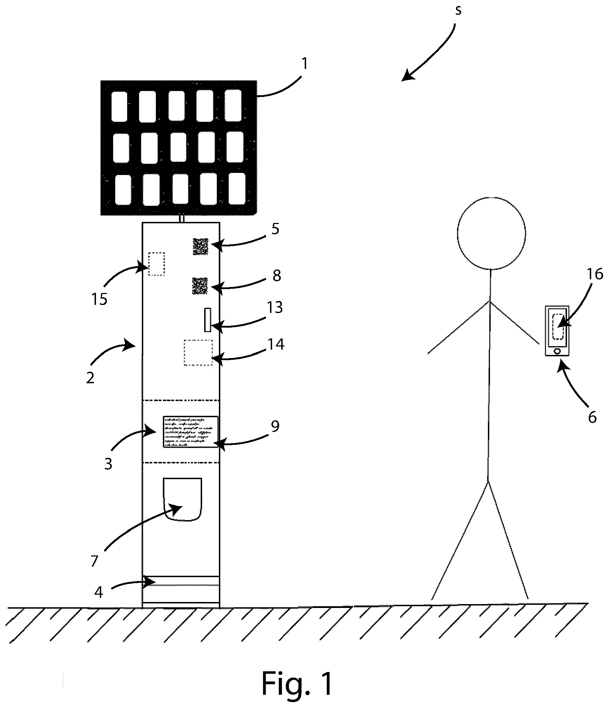

With reference to figure 1, the system S for printing photos/images comprises a vertical column 2, which is substantially a parallelepiped extending mainly along a vertical direction orthogonal to the ground.

The column 2 has an area of superior base or top on which a photovoltaic panel 1 is arranged, configured, and cabled to provide electrical power to the system S.

The system S comprises, furthermore, within the column 2, a printer 3 able to print photos and/or images on photographic paper o typically used for printing photographs, an outlet 7 for the output of the images printed, a first QR Code 8 visible on a wall of the column 2, which, when scanned by means of a QR Code reader, allows accessing a Wi-Fi network, a second QR Code 5, which, when scanned by means of a QR Code reader, allows the direct download of an application 16, directly from the smartphone 6, tablet, or similar electronic device used by the user.

The application 16 is available for iOS and Android, it is downloadable by a smartphone 6, tablet, or similar devices, and it allows the immediate connection with the printing system S.

Said application 16 is configured to manage the functioning of the system S, to permit the payment of an operation, to send a signal for printing, or to check the status of the system S.

The column 2, furthermore, comprises a first opening 13 to introduce the coins, a coin counter device/ electronic token counter 14 functionally connected to said opening 13 and to said application 16.

According to some embodiments, as can be seen from figure 1, said column 2 may comprise instructions 9 for the operation of said system S, e.g., glued on a wall of said column 2 and a group of batteries 4 to guarantee the supply of the system also in the case in which the power energy provided by the device for supply electrical power is insufficient.

In some embodiments, the instructions 9 about the operation of the system provide instructions related to all the steps of the operation going from how to download the application 16 to the final printing.

As said, within the column 2, there is a Wi-Fi repeater 15 to allow the users, e.g., locals and tourists, to download the application 16 and to communicate with the printing system S.

Said printer 3 may be a sublimation printer or ink jet or any other kind of printer, able to immediately printing images or photos of good quality.

In the present disclosure, a good quality printing refers to the printing on professional paper, digital, developed specifically for photographic printing, or gloss paper, semi-gloss paper and/or having a plain surface able to highline the colors and details of the subjects photographed.

In order to connect to the Wi-Fi network, it is enough to scan the first QR Code 8 or to look for the free network, that is with no password among, the list of Wi-Fi networks available from one's smartphone 6.

The user, after having downloaded the application on his/her own smartphone 16, that is user friendly, respectfully of the privacy and available in the most common languages, connects to the system and has the option, choosing the image/photo available in his/her gallery, to send a first direct printing input, or a second direct printing input after having customized the image/photo selected.

As said, the application 16 is available in the most common languages, e.g., English, French, German, Italian, Spanish, Portuguese, Russian, Chinese, Japanese, so that permit to anyone who wants to keep a memory, to immediately print the photo/image in direct way or by customizing it before printing it.

The application 16 allows, by means of a privacy consent, to access the multimedia gallery of the smartphone 6, where the user may select the images to print.

The application 16 provides the possibility of selecting between a first instantaneous printing standard or a second customized printing with the addition of marks, filters, labels, or symbols.

Once a printing input has been received by the application 16, the printer 3 proceeds to printing the images/photos selected by the user directly form the gallery of his/her smartphone 6.

Before that the application 16 sends the printing input, the user may choose the procedure of payment for the service. It is allowed to pay by means of card, PayPal, or any other method, or process, of electronic payment or by means coins to be inserted, when required, in the dedicated first opening 13, arranged, e.g., on the anterior part of the column 2.

Said application 16 has a backend control section, accessible only by owner credentials, through which it is possible to access data referring to operating statistics, battery levels, toner, and paper levels, and to receive reports of anomalies through sensors located within the system S.

Coins are recognized and counted through electronic systems of the coin counter/cash machine 14 which, upon reaching the amount required by the service or after dispensing change, sends a signal of successful payment to the application 16 which, accordingly, sends the final printing input to the printer 3.

Without departing from the scope of the present invention, the coin opening 13 for coins can include an additional opening for banknotes or be configured to receive both coins and banknotes, and the coin counter/coin machine 14 can be configured to also count banknotes inserted into the respective opening in conjunction with the coin counting.

Counting of coins, or banknotes, may happen by means of an electronic device for reading and counting 14 coins introduced in said first opening 13.

The electronic device for reading and counting 14 may comprise a display which shoes, on a face of the column 2, the amount introduced in the first opening 13, or may be functionally connected to the application 16, which shows the amount introduced to the user.

The system S comprises, preferably downstream or in proximity of the printer 3, a stockpile of photographic paper and toner cartridges, in order to minimize the maintenance and the replacement of the reserves.

The printer 3 is equipped with sensor able to send alerts to the owner or to the management operator of the printing system, once the printing ink or the printing paper are close to depletion or anomalies of the system S appear.

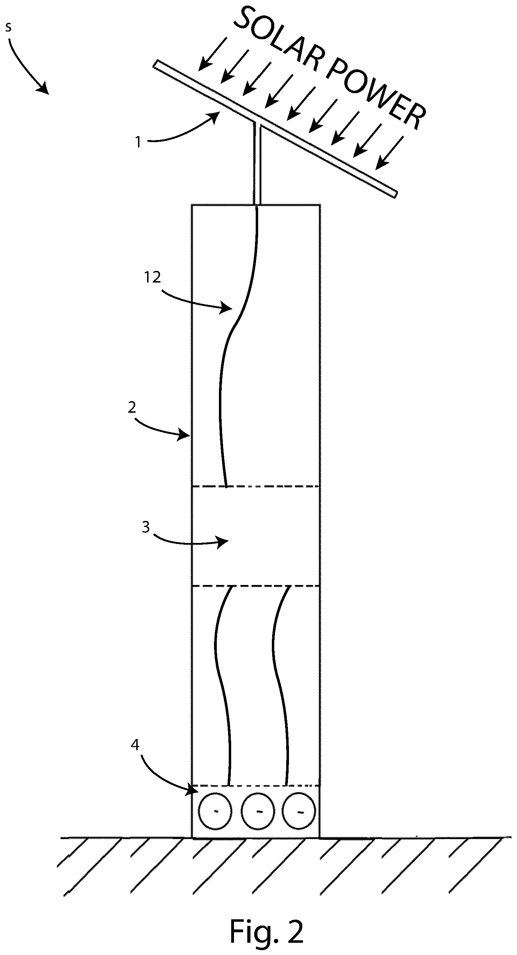

With reference to figure 2, the column has a parallelepiped shape with rectangular base.

Without departing from the scope of protection of the present invention, the column 2 may have a square base and it is preferably made of metal.

According to some embodiments, the column is made of wood or comprises material obtained from recycling of waste material.

As said, the device for supplying power energy is equipped with a photovoltaic panel 1, which preferably is south oriented and leaning based on the latitude of the installation site: particularly, as closer to the equator is, as smaller will be the inclination angle of the panel 1 with respect to a horizontal reference, because the rays of the sun at the equator will fall substantially perpendicular. The same photovoltaic panel 1 is connected to the remaining parts of system S, by means of electrical cables, or wirings 12. In particular, said electrical cables 12 may be connected to the batteries 4 and to the printer 3. The system S is secured in accordance with current regulations.

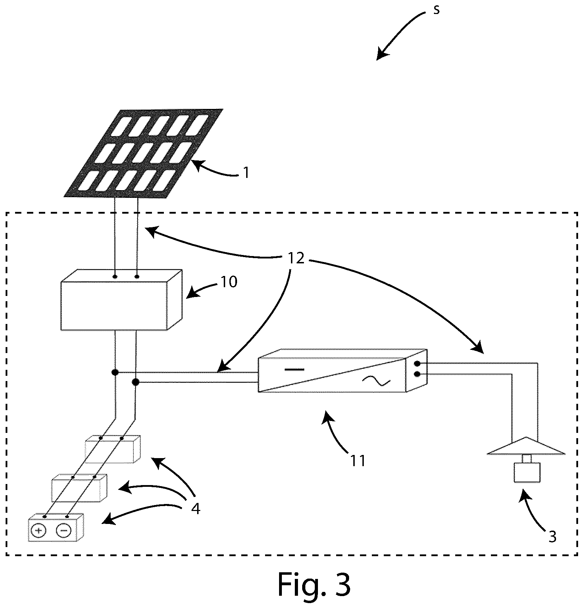

With reference to figure 3, it is schematically shown the device for supplying electrical power, which substantially is a photovoltaic implant (or module). The current produced by the photovoltaic panel 1 is direct current and it is connected to the remaining parts of the device by means of electrical cables 12. Before of proceeding its path, the electrical current produced goes through a charge regulator 10, able to regulate the electrical voltage of the photovoltaic panel 1, e.g., a solar panel, adapting said electrical voltage required for charge of the batteries 4, avoiding an overload thereof. In this way, the batteries 4 will have greater performances and will last longer.

According to some embodiments, said solar panel 1 is functionally connected to power storage batteries 4 which allow the whole system S to operate without interruptions, even during the nights and in days not very sunny.

Advantageously, the usage of said storage batteries 4 supplies where power production is reduced, particularly at night, on poorly sunny days, or in winter when the number of hours of light is less than the number of hours of darkness.

According to some embodiments, said device for supplying electrical power is equipped with a charge regulator 10 to guarantee the correct voltage to recharge the batteries 4. The recharge voltage may be predetermined in function of a predetermined threshold or may be correspond to a given percentage of minimum recharge to permit the system S to operate during a given time. This time may be the minimum time to run the printing of a photo/image or to let a user to run a printing process. In some examples, said recharge adjusted may permit the system S to operate during a day or during a certain number of dark hours, e.g., during the night.

Said device for supplying electrical power provides that after the current goes through the charge regulator 10, it is stored by the batteries 4.

According to some embodiments, a battery 4 is used.

In other embodiments, a plurality of batteries 4 is used, e.g., two, three, or four batteries may be employed in the system S of the present invention.

According to some embodiments, the system S is equipped with an inverter 11 such that the current, before reaching the printer 3, is commuted from direct current to alternating current.

Said inverter 11 makes the current immediately available to the printer 3.

In addition to the commutation function from direct to alternating current, advantageously, the inverter 11 allows to protect the system S from ground faults, and to provide data, e.g., system statistics. Some examples of system statistics include current data and voltage data of the electrical circuit of the same system S.

According to some embodiments, the feeding circuit provides that at the output of the inverter 11, the current is immediately used by the printer 3.

To download said application and to communicate with the system, it is required to use the mobile phone data network or to connect to the Wi-Fi repeater 15, with which the column 2 is equipped, e.g., with said Wi-Fi repeater 15 arranged within the column 2, wherein the Wi-Fi repeater 15 is a network free to be accessed thanks to the scan of the first QR Code 8, which is arranged on a portion of said column 2.

In the present disclosure, the expression network free refers to a network connection wireless to which it is possible to connect without requiring a password and without requiring subscribing any contract or paying any subscription. Within the present disclosure, the expression free line network is used with the same meaning of the expression network free.

A second QR Code 5 is arranged on a further portion of said column 2, e.g., near said first QR Code 8, and it may be scanned to readdress the user to a virtual store, e.g., apple store, or play store, to download said application.

The combination of said Wi-Fi repeater 15 and said first QR Code 8 to access the internet without cost allows anyone, and in particular, foreigners on holiday, who may have not access to the roaming with their phones, to take advantage of the service in easy way and without extra cost.

Therefore, the user scans the second QR Code 5 to download the application by using its own mobile phone data, or by connecting to the Wi-Fi network provided by the repeater arranged in the column 2.

At this stage, the user may select the images/photos from his/her gallery and decide to print directly or after having edit them.

Once the photos/images have been selected to be printed, the payment procedure runs, and after having completed said payment procedure and having sent the input for printing, the user may collect the printed photo, after few seconds, from the output 7 on the column 2.

Said output 7 represents a second opening 7 for the output of the photos/images printed, while the first opening 13 substantially is a hole to insert coins or banknotes.

Said first opening 13 may comprise a couple of openings dimensioned to receive respectively at least a coin and at least a banknote, and may be associated to the payment procedure, such that the application recognizes that the payment procedure is completed when coins or banknotes corresponding to the amount defined for printing said photos/images.

Said column 2 may comprise a third opening, or aperture arranged on the column 2, preferably under said first opening 13 in order to give back an eventual change if the user inserts coins or banknotes corresponding to a greater amount than the amount required to finalize the payment.

The operation of the system S is described below.

A user who is in the proximity of the system S, in order to instantaneously print images/photos, runs the following steps: reads a first QR Code 8 by means of a smartphone to access a network distributed by said Wi-Fi repeater 15, accesses said network, and reads a second QR Code 5 associated to the download of an application 16 for smartphone 6.

The step of reading the second QR Code 5 envisages that the download of the application 16 is doable in a smartphone 6, lacking said application. Where the smartphone 6 has already the application 16 installed, reading the second QR Code 5 may run the updates of the application 16 installed, or to skip the operations if the smartphone has an updated version.

Said application 16 comprises instruction that, when the application is executed by a smartphone, cause the execution of the following steps:
a. selecting the images/photos from a multimedia gallery of said smartphone 6; and
b. sending a first input to print said images/photos selected according to step a.

Should the user want to edit, apply a mark, or introduce words, or symbols to the images/photos to be printed, he/she may run, through the application 16, the following steps:
c. modifying or customize the images/photos selected according to step a; and
d. sending a second input to print the images/photos modified according to step c.

Furthermore, before than printing according anyone of steps b or d, by means of application 16, one may:
e. selecting a payment procedure from a list of procedure payment, which includes, e.g., to insert coins in the opening 13 or an electronic payment available online;
f. verifying that a payment made through said payment procedure selected has been realized; and
g. running the printing according to step b or d, following said verification according to step f.

Further, the application 16 provides the option of scheduling the printing of said images/photos according to step a or modified according to step c in a day and time selected by the user.

Furthermore, the option of sending an analysis of the performances of the system to the user is provided, as sending notifications or alerts about the status of the devices of said system, said status comprising data about their level of consumption and maintenance required, and to send a message indicating the presence of anomalies of the system if said levels of consumption and maintenance required are greater than, respectively a consumption threshold and a maintenance required threshold. In particular, the visualization of data of performance of the system, levels of consumption and maintenance may be restricted to a limited number of users by means of a password.

In the above, preferred embodiments have been disclosed and variants of the present invention have been given, but it is to be understood that modification and changes may be introduced by those skilled in the art without departing from the relative scope of protection, as defined by the enclosed claims.

## Claims

1. System integrated environment-friendly for instantaneous printing of images/photos, comprising:
- a sublimation or inkjet printer (3), which allows printing of an image or a photo immediate and of quality;
- a vertical column (2) having a superior base, a lateral structure capable of containing and protect said printer (3), wherein said column (2) is equipped with a first opening (13) to insert coins;
- an electronic device to read and count (14) able to count the coins inserted on said first opening (13);
- a device to provide electrical power to said system (S), having a photovoltaic panel (1) arranged on said superior base of said column (2);
- a Wi-Fi repeater (15) able to distribute a free line network;
- a first QR Code (8) arranged on a first portion of said lateral structure and configured to be scanned and to readdress to the network distributed by said Wi-Fi repeater (15); and
- a second QR code (5) arranged on a second portion of said lateral structure and configured to be scanned by a smartphone (6) and to readdress to the download of an application (16), which allows said smartphone (6) to functionally connect said system (S) and to manage said printer (3).

2. System (S) according to claim 1, **characterized in that** said column (2) has a shape of parallelepiped with rectangular base or squared base, able to sustain and protect the system (S).

3. System (S) according to claim 1 or 2, **characterized in that** said column (2) is made of metal, wood, or a material obtained by recycling a waste material.

4. System (S) according to anyone of the preceding claims, **characterized in that** said column (2) is equipped with a second opening (7) for the output, from said column (2), of an image printed from said printer (3).

5. System integrated according to anyone of the preceding claims, **characterized in that** said printer (3) is arranged within said column (2) at or near said opening (7).

6. System (S) according to anyone of the preceding claims, **characterized in that** said printer (3) is able to receive operating instructions from said application (16), which can be downloaded by means of said QR code (5).

7. System (S) according to the preceding claim, **characterized in that** said operating instructions comprise one or more instructions to run a process of printing photos/images.

8. System (S) according to anyone of the preceding claims, **characterized in that** said device for supplying electrical power is able to feed said printer (3), to which it is connected.

9. System (S) according to anyone of the preceding claims, **characterized in that** said photovoltaic panel (1) of said device for supplying electrical power is a solar panel (1) oriented towards the south and able to change the inclination thereof based on the latitude of the installation site of said system (S).

10. System (S) according to the preceding claim, **characterized in that** said solar panel (1) is functionally connected to power storage batteries (4).

11. System (S) according to the preceding claim, **characterized in that** said device for supplying electrical power is equipped with a charge regulator (10) to guarantee a voltage of recharge of the batteries (4) adjusted to said system (S).

12. System (S) according to anyone of the preceding claims, **characterized in that** said device for supplying electrical power is equipped with electrical cables (12) to functionally connect to said printer (3) and an inverter (11) able to commute a direct current provided by said photovoltaic panel (1), to an alternating current to supply said printer (3).

13. Method of operating a system (S) for instantaneous printing of images/photos according to anyone of the preceding claims, which comprises the following steps:
- reading a first QR Code (8) by means of a smartphone, tablet, or similar device to access a network distributed by said Wi-Fi repeater (15);
- accessing said network;
- reading a second QR code (5) associated to the download of an application for smartphone (6), tablet, or similar device, said application comprising instructions that, when a smartphone (6), tablet, or similar device run the application, cause the implementation, by said smartphone (6), tablet, or similar device, of the steps:
a. selecting the images/photos from a multimedia gallery of said smartphone (6), tablet, or similar device; and
b. sending a first input to print said selected images/photos according step a.

14. Method according the preceding claim wherein said application comprises instructions that, a smartphone (6), tablet, or similar device run the application, cause the implementation, by said smartphone (6), tablet, or similar device, of the further steps of:
c. modifying or customizing said images/photos selected according to step a; and
d. sending a second input to print images/photos modified according to step c.

15. Method according to any of the claims 13 or 14 wherein said application comprises instructions that, when a smartphone (6), tablet, or similar device run the application, respectively before anyone of the steps b or d, cause that the smartphone (6), tablet, or similar device runs the further steps of:
e. selecting a procedure of payment from a list of procedures of payment which comprises coins to be inserted in said opening (13) of said column (2) connected to a counting and reading coins machine (14), or a procedure of electronic payment available online;
f. verifying that a payment has been made by means of said selected procedure; and
g. running the step b or d, after said verification according to step f.

16. Method according anyone of the claims 13-15 which comprises the further step of
h. programming the printing of said images/photos according step a or modified according step c in a day and a time selected by the user.

17. Method according to anyone of the claims 13-16 which comprises the steps of
i. sending to a user an analysis of the performances of the system;
j. sending to a user notifications or alerts about the status of devices of said system, said status comprising data about their levels of consumption or maintenance required; and
k. sending a message indicating the presence of anomalies of the system if said levels of consumption or maintenance required are greater than respectively a consumption threshold and a threshold of maintenance required.
